Europäisches Patentamt

(19) European Patent Office

Office européen des brevets

(11)  EP 0 640 362 B1

(12)  **EUROPEAN PATENT SPECIFICATION**

(45) Date of publication and mention
of the grant of the patent:
**22.07.1998 Bulletin 1998/30**

(51) Int. Cl.$^6$: **A63B 37/12**, C05D 5/00

(21) Application number: **94306301.6**

(22) Date of filing: **26.08.1994**

(54) **Clear paint for golf ball and golf ball coated with the same**

Transparenter Anstrich für einen Golfball und mit diesem Anstrich versehener Golfball

Peinture transparente pour une balle de golf et balle de golf couverte avec cette peinture

(84) Designated Contracting States:
**DE FR GB**

(30) Priority: **26.08.1993 JP 235409/93**

(43) Date of publication of application:
**01.03.1995 Bulletin 1995/09**

(73) Proprietor:
**SUMITOMO RUBBER INDUSTRIES, LTD.
Hyogo-ken (JP)**

(72) Inventors:
• **Yamada, Mikio
Kobe-shi, Hyogo-ken (JP)**
• **Kitaoh, Katsutoshi
Kobe-shi, Hyogo-ken (JP)**
• **Horiuchi, Kuniyasu
Kobe-shi, Hyogo-ken (JP)**

(74) Representative:
**Allard, Susan Joyce et al
BOULT WADE TENNANT,
27 Furnival Street
London EC4A 1PQ (GB)**

(56) References cited:
**EP-A- 0 419 079          GB-A- 2 144 045
US-A- 4 679 794          US-A- 4 865 326**

## Description

The present invention relates to a clear paint for a golf ball, and a golf ball having high whiteness, the surface of which is coated with the clear paint.

The surface finish of a golf ball is normally conducted by coating an opaque enamel paint on the surface of the golf ball and then coating a clear paint thereon, or coating the clear paint directly on the surface of the golf ball.

That is, by means of the surface finish, the background color of the golf ball is opacified with the enamel paint which also imparts desirable color tone (normally, white color) to the golf ball. Further, any mark printed on the enamel coating or the surface of the golf ball is protected with the clear paint which also imparts gloss to the golf ball, thereby providing a beautiful appearance and durability to the golf ball.

Further, in order to improve the whiteness of a golf ball, a fluorescent brightener is formulated in the enamel paint, in addition to white pigments such as titanium dioxide, barium sulfate, etc. (e.g. Japanese Laid-Open Patent Publication No. 1-158976). US-4,865,326 relates to a clear coat for applying to the cover of a golf ball. Furthermore, combinations of a fluorescent brightener and a blue pigment are also formulated (e.g. Japanese Laid-Open Utility Model Publication No. 61-168855).

However, when a fluorescent brightener and blue pigment are formulated in the enamel paint, in order to attain sufficient effect quite large amount of them have to be formulated. However, it is rather difficult to formulate them in quite such large amounts in the enamel paint, because a large amount of a white pigment is already formulated impart strong opacifying strength. Therefore, whiteness is not sufficiently improved.

On the other hand, in case of the clear paint, only the fluorescent brightener is formulated even when it is coated directly on the surface of the golf ball (e.g. Japanese Laid-Open Utility Model Publication No. 60-109647). The fluorescent brightener and blue pigment are not formulated together.

The reason is considered to be as follows. That is, when the blue pigment is formulated in the clear paint, the clear paint can not maintain its transparency and becomes turbid because the blue pigment cannot dissolve in the solvent, thereby spoiling the clear paint.

Accordingly, high whiteness can not be obtained for a golf ball coated only with a conventional clear paint.

Under these circumstances, in order to solve the problem that high whiteness can not be obtained for a conventional golf ball, the present inventors have intensively studied.

The main object of the present invention is to provide a clear paint which can impart high whiteness to the golf ball, and the resulting golf ball having high whiteness.

This object as well as other objects and advantages of the present invention will become apparent to those skilled in the art from the following description.

That is, the present invention provides a clear paint for a golf ball to be coated on the surface of the golf ball, which comprises 100 parts by weight(solid) of a clear paint resin, in the range of from 0.01 to 2 parts by weight of a fluorescent brightener and in the range of from 0.001 to 0.5 parts by weight of a blue pigment.

Also, the present invention provides a golf ball the surface of which is coated with the clear paint.

In the present invention, by formulating the blue pigment in the clear paint along with the fluorescent brightener, whiteness can be further improved by a bluish white due to the blue pigment, thereby succeeding in imparting improved whiteness in comparison with a clear paint containing only fluorescent brightener and a clear paint containing no fluorescent brightener and blue pigment.

In the present invention, the fluorescent brightener and blue pigment are formulated in the clear paint so that the whiteness of the golf ball can be improved by formulating a rather small amount of them, in comparison with formulation in the enamel paint. In other words, since a white pigment, having a strong opacifying strength is not formulated in the clear paint, whiteness of the golf ball can be sufficiently improved only by formulating a small amount of the fluorescent brightener and blue pigment.

Before the present invention, it was believed that, when blue pigment is formulated in the clear paint, transparency of the clear paint is deteriorated because the blue pigment can not be dissolved in the solvent present in the clear paint. Accordingly, the blue pigment could not be formulated in the clear paint. On the contrary to the old thinking, whiteness of the golf ball is improved without deteriorating transparency of the clear paint by formulating a small amount of the blue pigment and fluorescent brightener in the clear paint. Thus, by a new train of thought, the present invention has obtained a remarkable effect that the whiteness of golf balls can be improved by formulating a small amount of blue pigment.

The terms "clear paint resin" as used herein mean a resin component which has film formability on the surface of a golf ball, generally referred to as "film-forming resin". The clear paint resin includes urethane resin, epoxy resin, acrylic resin and the like or a mixture of two or more thereof. Particularly, a urethane resin is preferred. As the urethane resin, there can be normally used a "two-pot reaction type" urethane resin of a polyol and a diisocyanate.

The fluorescent brightener has a function of absorbing a non-visible ultraviolet range of a sunlight spectrum and converting the energy into a visible range having a long wavelength spectrum. Examples of the fluorescent brightener include stilbene derivatives, styryl derivatives of benzene or biphenyl, bis(benzazole-2-yl) derivatives, coumarin, carbostyryl, naphthalimide, derivatives of dibenzothiophene-5, 5-dioxide, pyrene derivatives, pyridotriazole and the like or a mixture of two or more thereof. More particularly, examples thereof include a derivative of 4,4'-diaminostilbene-2,2'-disulfonic acid, 4-methyl-7-diethylaminocoumarin, 2,5-bis(5-tert-butyl-2-benzoxazoyl)thiophene and the like.

In the present invention, the fluorescent brightener is formulated in an amount of from 0.01 to 2 parts by weight, preferably in the range of from 0.05 to 0.5 parts by weight, based on 100 parts by weight(solid) of the clear paint resin. When the amount of the fluorescent brightener is smaller than 0.01 parts by weight based on 100 parts by weight of the clear paint resin, the effect of improving whiteness of the golf ball is insufficient. On the other hand, even if the amount of the fluorescent brightener is larger than 2 parts by weight based on 100 parts by weight of the clear paint resin, the effect of improving whiteness of the golf ball is not increased and, further, the cost thereof increases and decoloration due to ultraviolet ray increases, and this is not preferred.

As the blue pigment, for example, there can be used $\varepsilon$-, $\beta$-, $\alpha$-Phthalocyanine Blue, Indanthron Blue and the like, or a mixture of two or more thereof.

In the present invention, the blue pigment is formulated in an amount of from 0.001 to 0.5 parts by weight, preferably in the range of from 0.01 to 0.3 parts by weight, based on 100 parts by weight(solid) of the clear paint. When the amount of the blue pigment is smaller than 0.001 parts by weight based on 100 parts by weight of the clear paint resin, the effect of improving whiteness of the golf ball is insufficient. On the other hand, when the amount of the blue pigment is larger than 0.5 parts by weight based on 100 parts by weight of the clear paint resin, bluing effect is liable to become too large, which results in deterioration of transparency.

The clear paint is normally used in a state that a resin and the other components are dissolved/dispersed in a solvent such that the concentration of the resin solid content becomes in the range of from about 10 to 60% by weight. As the solvent, for example, there can be used esters (e.g. ethyl acetate, butyl acetate), ketones (e.g. methyl ethyl ketone, acetone), alcohols (e.g. methanol, ethanol), aromatic hydrocarbons (e.g. benzene, toluene) and the like or a mixture of two or more thereof.

The clear paint used in the present invention may be coated directly on the surface of the golf ball, or coated after the enamel paint coat.

For example, a two-piece solid golf ball employing an ionomer resin as the cover material has a share of not less than 60% in a recent market of the golf ball. Since white pigments such as titanium dioxide are formulated in the cover in the golf ball with the ionomer cover, the clear paint of the present invention may be coated directly on the white cover.

With respect to a balata cover golf ball which is exclusively used by professional golfers or advanced golfers and a one-piece golf ball which is mainly used on a driving range, it is difficult to obtain a golf ball having an excellent color tone by a coating of only the clear paint because it is influenced by the background color. Therefore, the enamel paint is preferably firstly coated on the ball and then the clear paint is coated thereon. When the clear paint of the present invention is used for such a golf ball, it is preferred that the enamel paint is firstly coated and then the clear paint of the present invention is coated thereon.

The coating weight of the above clear paint is preferably selected such that the dry thickness becomes in the range of from 5 to 100μm, particularly in the range of from 10 to 50μm, similar to a conventional clear paint.

As described above, according to the present invention, there is provided a clear paint which can impart high whiteness to golf ball, and a resulting golf ball having high whiteness.

EXAMPLES

The following Examples and Comparative Examples further illustrate the present invention in detail but are not to be construed to limit the scope thereof.

Examples 1

A thread wound three-piece golf ball with an ionomer cover, which is coated with a cover material of a formulation shown in Table 1 was subjected to normal pretreatment for coating such as blast treatment. Then, an enamel paint prepared by formulating 0.5 parts by weight of a fluorescent brightener containing 2,5-bis(5-tert-butyl-2-benzoxazolyl)thiophene as a main component [UBITEX-OB (trade name), manufactured by Ciba Geigy Co.], 0.03 parts by weight of a blue pigment Phthalocyanine Blue and 50 parts by weight of titanium dioxide in 100 parts by weight of an urethane resin (two-part reaction type, a mixture of two parts is used) was coated on the surface of the golf ball, and marking was provided thereon.

Table 1

|  | Amount (Parts by weight) |
|---|---|
| Hi-milan 1605 *1 | 50 |
| Hi-milan 1706 *2 | 50 |
| Titanium dioxide | 2 |
| Blue pigment (Ultramarine Blue) | 0.03 |

*1: Trade name, ethylene neutralized with sodium ion-methacrylic acid ionomer resin manufactured by Mitsui Du Pont Polychemical Co.
*2: Trade name, ethylene neutralized with zinc ion-methacrylic acid ionomer resin manufactured by Mitsui Du Pont Polychemical Co.

Then, the following three kinds of clear paints were coated on the golf balls coated with the enamel paint described above, respectively. The film thickness after drying of the enamel paint layer was 15 µm and that of the clear paint layer was 15 µm.

Clear paint A:

Clear paint with blue function prepared by formulating 0.2 parts by weight of the above fluorescent brightener UBITEX-OB (trade name) and 0.1 parts by weight of the blue pigment Phthalocyanine Blue in 100 parts by weight of the urethane resin

Clear paint B:

Clear paint prepared by formulating the same fluorescent brightener and blue pigment as that used in the above clear paint A according to the same manner as that described above except for increasing the amount of the blue pigment Phthalocyanine Blue to 0.2 parts by weight

Clear paint C:

Clear paint prepared by formulating 0.2 parts by weight of the above fluorescent brightener UBITEX-OB (trade name) in 100 parts by weight of the urethane resin, but no blue pigment being formulated

Regarding the golf ball coated with the above clear paint, a color tone was measured using a colorimeter [CR221 (trade name), manufactured by Minolta Co.]. The results are shown in Table 2 below. A light source used for the measurement is $D_{65}$.

Among above clear paints A to C, clear paints A and B belong to the present invention, and the clear paint C is not included in the present invention because it contains no blue pigment.

Accordingly, the golf ball coated with the clear paint A and that coated with the clear paint B are referred to as Example ① and Example ②, respectively. Further, the golf ball coated with the clear paint C is referred to as Comparative Example ①.

A golf ball made in U.S.A. which is famous for its high whiteness among commercially available thread wound golf balls was purchased, and it is referred to as Commercially available product ①. Then, a color tone was measured according to the same manner as that described above. The results are also shown in Table 2. As a matter of course, this Commercially available product ① is a golf ball which is not included in the present invention.

Table 2

|  | Golf ball | | | |
|---|---|---|---|---|
|  | Example ① | Example ② | Comparative Example ① | Commercially available product ① |
| Y | 77.41 | 74.92 | 79.57 | 76.22 |
| x | 0.2960 | 0.2918 | 0.2996 | 0.2959 |

Table 2 (continued)

| | Golf ball | | | |
|---|---|---|---|---|
| | Example ① | Example ② | Comparative Example ① | Commercially available product ① |
| y | 0.3115 | 0.3090 | 0.3137 | 0.3128 |
| $W_{CIE}$ | 120.52 | 125.64 | 116.06 | 117.20 |
| L* | 90.50 | 89.35 | 91.49 | 89.96 |
| a* | -0.01 | -1.04 | 0.79 | -0.70 |
| b* | -9.17 | -10.58 | -7.82 | -8.63 |

In the L* a* b* color system, the a* axis represents red-green color, the b* axis represents blue-yellow color, (+) side of the b* axis represents yellow range and (-) side of the b* axis represents blue range. As shown in Table 2, regarding both Examples ① and ② of the present invention, the value at (-) side of the b* axis is large, which shows that blue function is strong.

Further, $W_{CIE}$ value indicates whiteness, and the larger the value, the higher whiteness. As shown in Table 2, regarding both Examples ① and ② of the present invention, the $W_{CIE}$ value is large and, therefore, whiteness is large in comparison with Comparative Example ① and Commercially available product ① which are not included in the present invention.

Further, the $W_{CIE}$ value is calculated by the following calculation formula, and $x_0$ and $y_0$ used in the calculation formula represent, respectively, a constant when $D_{65}$ is used as a light source.

Calculation formula of $W_{CIE}$

$$W_{CIE} = y + 800 (x_0 - x) + 1700 (y_0 - y)$$

wherein $X_0$ is 0.3127 and $Y_0$ is 0.3290.

Then, these golf balls were placed in a sunshine wetherometer manufactured by Suga Seisakusho Co., Ltd., and change in whiteness after irradiation of ultraviolet ray (carbon light source) for 24 hours was measured. The results are shown in Table 3. In Table 3, the $W_{CIE}$ values before and after irradiation of ultraviolet ray as well as the difference between both $W_{CIE}$ values are shown.

Table 3

| | $W_{CIE}$ value | | |
|---|---|---|---|
| | Before irradiation | After irradiation | Difference |
| Example ① | 120.52 | 103.30 | 17.22 |
| Example ② | 125.64 | 107.34 | 18.30 |
| Comparative Example ① | 116.06 | 99.57 | 16.49 |
| Commercially available product ① | 117.20 | 85.78 | 31.42 |

As is shown in Table 3, regarding both Examples ① and ② of the present invention, discoloration due to irradiation of ultraviolet ray is not so different from that of Comparative Example ①. They maintained high whiteness after irradiation of ultraviolet ray.

Examples 2

A two-piece solid golf ball with an ionomer cover, which is coated with a cover material of a formulation shown in Table 4 was subjected to a normal pretreatment for coating and marking was provided thereon. Then, the following two kinds of clear paints D and E were coated, respectively. The film thickness after drying was 30 μm, respectively.

Table 4

|  | Amount (Parts by weight) |
|---|---|
| Hi-milan 1555 *3 | 6.25 |
| Hi-milan 1557 *4 | 6.25 |
| Hi-milan 1605 | 43.75 |
| Hi-milan 1706 | 43.75 |
| Titanium dioxide | 2 |
| Barium sulfate | 2 |
| Blue pigment (Ultramarine Blue) | 0.03 |

*3: Trade name, ionomer resin manufactured by Mitsui Du Pont Polychemical Co.
*4: Trade name, ionomer resin manufactured by Mitsui Du Pont Polychemical Co.

Clear paint D:

Clear paint prepared by formulating 0.2 parts by weight of the above fluorescent brightener UBITEX-OB (trade name) and 0.07 parts by weight of the blue pigment Phthalocyanine Blue in 100 parts by weight of the urethane resin

Clear paint E:

Clear paint prepared by formulating 0.2 parts by weight of the above fluorescent brightener UBITEX-OB (trade name) in 100 parts by weight of the urethane resin, but no blue pigment being formulated

Regarding the golf balls coated with the above clear paint, a color tone was measured using the same colorimeter as that described above. The results are shown in Table 5 below. A light source used for the measurement is also $D_{65}$.

Among clear paints D and E, the clear paint D belongs to the present invention, and the clear paint E is not included in the present invention because it contains no blue pigment.

Accordingly, the golf ball coated with the clear paint D and that coated with the clear paint E are referred to as Example ③ and Comparative Example ②, respectively.

A golf ball made in U.S.A. which is famous of its high whiteness among commercially available two-piece solid golf balls was purchased for comparison, and it is referred to as Commercially available product ②. Then, a color tone was measured according to the same manner as that described above. The results are also shown in Table 5. As a matter of course, this Commercially available product ② is a golf ball which is not included in the present invention.

Table 5

|  | Golf ball | | |
|---|---|---|---|
|  | Example ③ | Comparative Example ② | Commercially available product ② |
| Y | 76.99 | 77.02 | 75.62 |
| x | 0.2952 | 0.2973 | 0.2958 |
| y | 0.3111 | 0.3124 | 0.3124 |
| $W_{CIE}$ | 121.59 | 117.73 | 117.53 |

As is shown in Table 5, Example ③ of the present invention showed large $W_{CIE}$, and whiteness was high in comparison with Comparative Example ② and Commercially available product ②.

**Claims**

1. A clear paint for a golf ball, to be coated on the surface of the golf ball, which comprises 100 parts by weight (solid) of a clear paint resin and in the range of from 0.01 to 2 parts by weight of a fluorescent brightener, characterised in that the clear paint further comprises in the range of from 0.001 to 0.5 parts by weight of a blue pigment.

2. A clear paint for a golf ball as claimed in claim 1 wherein the clear paint resin is a urethane resin.

3. A clear paint for a golf ball as claimed in claim 1 or claim 2 wherein the blue pigment is at least one blue pigment selected from Phthalocyanine Blue or Indanthron Blue.

4. A clear paint for a golf ball as claimed in any one of claims 1 to 3 wherein the fluorescent brightener is at least one fluorescent brightener selected from a derivative of 4,4'-diaminostilbene-2,2'-disulfonic acid, 4-methyl-7-diethylaminocoumarin or 2,5-bis(5-tert-butyl-2-benzoxazoyl) thiophene.

5. A golf ball, the surface of which is coated with clear paint as claimed in any one of claims 1 to 4.

6. A golf ball as claimed in claim 5 further comprising a coat of enamel paint between the golf ball and the clear paint coat.

7. A golf ball as claimed in claim 5 or claim 6 wherein the clear paint has a dry thickness in the range of from 5 to 100μm.

8. A method of making a golf ball as claimed in claim 5 comprising coating a golf ball with clear paint as claimed in claim 1.

9. A method of making a golf ball as claimed in claim 6 comprising coating a golf ball with an enamel paint and subsequently coating the enamel paint-coated golf ball with clear paint as claimed in claim 1.

10. The use of clear paint as claimed in claim 1 in coating golf balls.


**Patentansprüche**

1. Klarlack für einen Golfball, der auf die Oberfläche des Golfballs aufzutragen ist, umfassend 100 Gewichtsteile (Feststoff) eines Klarlacknarzes und im Bereich von 0,01 bis 2 Gewichtsteile eines optischen Fluoreszenzaufhellers, dadurch gekennzeichnet, daß der Klarlack ferner im Bereich von 0,001 bis 0,5 Gewichtsteile eines blauen Pigments umfaßt.

2. Klarlack für einen Golfball nach Anspruch 1, wobei das Klarlacknarz ein Urethanharz ist.

3. Klarlack für einen Golfball nach Anspruch 1 oder 2, wobei das blaue Pigment wenigstens eines ist, ausgewählt aus Phthalocyanine Blue oder Indanthron Blue.

4. Klarlack für einen Golfball nach einem der Ansprüche 1 bis 3, wobei der optische Fluoreszenzaufheller wenigstens ein optischer Fluoreszenzaufheller ist, ausgewählt aus einem Derivat von 4,4'-Diaminostilben-2,2'-disulfonsäure, 4-Methyl-7-diethylaminocoumarin oder 2,5-Bis(5-tert-butyl-2-benzoxazoyl)thiophen.

5. Golfball, dessen Oberfläche mit einem Klarlack nach einem der Ansprüche 1 bis 4 beschichtet ist.

6. Golfball nach Anspruch 5, der ferner zwischen dem Golfball und der Klarlackbeschichtung eine Schicht einer Lackfarbe umfaßt.

7. Golfball nach Anspruch 5 oder 6, wobei der Klarlack eine Trockendicke im Bereich von 5 bis 100 μm besitzt.

8. Verfahren zur Herstellung eines Golfballs nach Anspruch 5, umfassend Beschichten eines Golfballs mit dem Klarlack nach Anspruch 1.

9. Verfahren zur Herstellung eines Golfballs nach Anspruch 6, umfassend Beschichten eines Golfballs mit einer Lackfarbe und nachfolgendes Beschichten des mit der Lackfarbe beschichtenen Golfballs mit dem Klarlack nach Anspruch 1.

10. Verwendung des Klarlacks nach Anspruch 1 zum Beschichten von Golfbällen.

## Revendications

1. Peinture transparente pour une balle de golf, devant être déposée sur la surface de la balle de golf, qui comprend 100 parties en poids (en extrait sec) d'une résine pour peinture transparente et de l'ordre de 0,01 à 2 parties en poids d'un azurant optique, caractérisée en ce que la peinture transparente comprend en outre de l'ordre de 0,001 à 0,5 partie en poids d'un pigment bleu.

2. Peinture transparente pour une balle de golf selon la revendication 1, dans laquelle la résine pour peinture transparente est une résine d'uréthanne.

3. Peinture transparente pour une balle de golf selon la revendication 1 ou 2, dans laquelle le pigment bleu est au moins un pigment bleu choisi parmi le bleu de phtalocyanine et le bleu d'indanthrène.

4. Peinture transparente pour une balle de golf selon l'une quelconque des revendications 1 à 3, dans laquelle l'azurant optique est au moins un azurant optique choisi parmi un dérivé de l'acide 4,4'-diaminostilbène-2,2'-disulfonique, la 4-méthyl-7-diéthylaminocoumarine et le 2,5-bis(5-tert-butyl-2-benzoxazoyl)thiophène.

5. Balle de golf, dont la surface est revêtue d'une peinture transparente selon l'une quelconque des revendications 1 à 4.

6. Balle de golf selon la revendication 5, comprenant en outre un revêtement de peinture vernie entre la balle de golf et le revêtement de peinture transparente.

7. Balle de golf selon la revendication 5 ou 6, dans laquelle la peinture transparente a une épaisseur à sec située dans la plage allant de 5 à 100 µm.

8. Procédé pour produire une balle de golf selon la revendication 5, comprenant le revêtement d'une balle de golf avec une peinture transparente selon la revendication 1.

9. Procédé pour produire une balle de golf selon la revendication 6, comprenant le revêtement d'une balle de golf avec une peinture vernie et le revêtement subséquent de la balle de golf revêtue de peinture vernie avec une peinture transparente selon la revendication 1.

10. Utilisation d'une peinture transparente selon la revendication 1 dans le revêtement de balles de golf.